# EUROPEAN PATENT SPECIFICATION

(11) **EP 3 513 907 B1**
(45) Date of publication and mention of the grant of the patent: **24.07.2024**
(21) Application number: 19150540.3
(22) Date of filing: 07.01.2019
(51) Int. Cl.: B23Q 5/26, F15B 15/14

(54) **MACHINE TOOL AND OPERATING METHOD THEREOF**
WERKZEUGMASCHINE UND VERFAHREN ZUM BETREIBEN DER WERKZEUGMASCHINE
MACHINE-OUTIL ET METHODE D'OPERATION DE CETTE MACHINE-OUTIL

(30) Priority: 22.01.2018 IT 201800001628
(43) Date of publication of application: 24.07.2019
(73) Proprietor: SCM Group S.p.A., 47921 Rimini (RN) (IT)
(72) Inventor: GALLO, Gianluca, 47921 Rimini (IT)
(74) Representative: Tiburzi, Andrea

(56) References cited:
- EP-A1- 1 712 337
- EP-A1- 1 777 048
- EP-A2- 1 524 057
- GB-A- 1 381 356

## Description

This invention relates to a machine tool and operating method thereof.

More in detail, the invention relates to a machine tool of the said type, designed and manufactured in particular for actuating a machine tool from a rest position to an operating position, but which can be used in any case in which it is necessary to actuate a device moving it between two different operating positions, which allows a high level of operational efficiency.

The description below relates to the operation of a machine tool for machining wood, but it is quite apparent how the same should not be considered limited to this specific use.

As is well known, in the sector of machine tools for machining, for example, wood, use is made of multi-axis heads, which are able to orient in space a spindle on which is installed a suitable machine tool, such as a milling cutter, a drill and the like.

Electrical type connections are normally necessary for operation of the spindle.

Moreover, the machine tool is positioned in such a way as to adopt a withdrawn non-operating position and an extracted operating position. For this reason, there are pneumatic systems comprising a piston-cylinder assembly, wherein the piston is moved by means of pneumatic actuators or members.

An example of a multi-axis head (in particular, with five or six axes) in which the actuators are both electric and pneumatic is described in European patent document EP1640112B1. The document describes in particular a multi-axis machining head for machining wood, having a housing for a spindle, which can be rotated about an axis, which has in particular an interface for the power supply, in particular electricity, and/or compressed air, for the operation of the head.

EP 1 777 048 A1 discloses a machine tool according to the preamble of claim 1.

A technical problem of the pneumatic actuation systems according to the prior art is the fact that it is generally necessary to provide two different compressed air lines, for the extraction and for the withdrawal of the piston. This results in the need to provide a double pneumatic circuit, with evident increase in the cost and the overall dimensions of the actuation systems.

It is clear how this procedure is onerous in terms of efficiency and industrial costs.

In light of the above, it is therefore the aim of the invention to provide a pneumatic actuation system which can operate with a single compressed air supply line.

The aim of the invention is also to provide a pneumatic actuation system which can structurally and economically advantageous.

The invention therefore relates specifically to a machine tool as defined in claim 1.

Advantageously, according to the invention, said piston-cylinder assembly can comprises a silencer filter connected to said second chamber.

Another object of the invention is an operating method of a machine tool as described above, wherein said pneumatic actuation system is configured for performing the following steps: blowing air through said air supply line for supplying compressed air to said machining aggregate for performing a first operation, and sucking air through said air supply line for generating a vacuum for said machining aggregate for performing second operation.

Also according to the invention, said first operation may increase upon command the pressure of said first chamber by means of the compressed air coming from said air supply line, so that the pressure of said first chamber of said cylinder is greater than that of said second chamber of said cylinder, for lowing said piston, and said second operation reduces upon command the pressure of said first chamber of said cylinder, that is, creating a vacuum in said first chamber so that the pressure of said chamber of said cylinder is less than that in said second chamber of said cylinder, for raising said piston.

The invention is now described, by way of example and without limiting the scope of the invention, according to its preferred embodiments, with particular reference to the accompanying drawings, in which:
Figure 1 shows a machine tool according to the invention whilst a piston is lowered;
Figure 2 shows a basic diagram of a pneumatic actuation system for the machine tool according to Figure 1;
Figure 3 shows the diagram of Figure 2 whilst the piston is raised;
Figure 4 shows a perspective view of a pneumatic system of s second embodiment of a pneumatic actuation system according to the invention; and
Figure 5 shows a further perspective view of the pneumatic actuation system of Figure 4.

The similar parts will be indicated in the various drawings with the same numerical references.

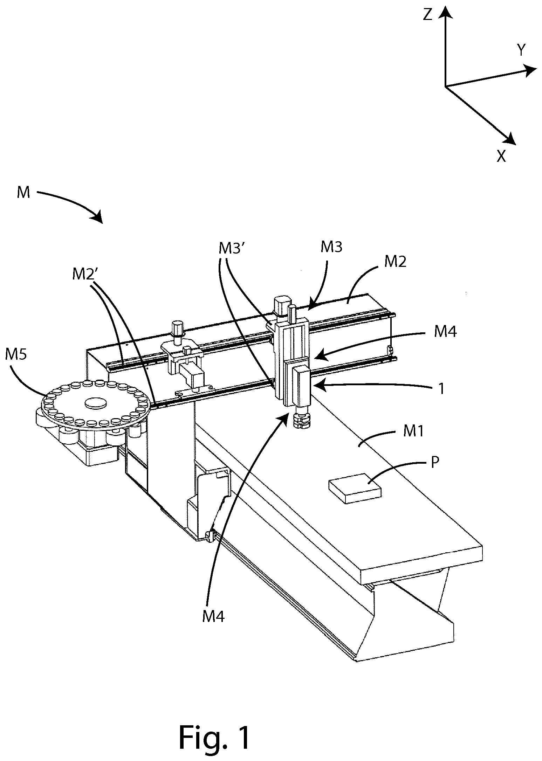

Figure 1 shows a machine tool M for machining pieces P, in particular pieces made of wood, plastic, glass and the like, which comprises a base M1, for supporting and locking at least one piece P to be machined, and a crossbeam M2, positioned above said base M1 and movable relative to it, with respect to a set of Cartesian axes X, Y Z, along a first direction or axis X.

Said machine tool M also comprises a multi-axis machining head M3, slidably coupled to said crossbeam M2, along a second direction or axis Y perpendicular to said first direction or axis X, by means, for example, of slides M3', slidably coupled to respective guides M2', positioned on said crossbeam M2. Said multi-axis machining head M3 is also movable along a third direction or axis Z, perpendicular to said first Y and second X direction.

The machine tool M also comprises at least one machining aggregate M4 removably coupled with said machining head M3, of the multi-axis type, and a tool holder M5, for changing tools during the various machining operations.

The machining head M3 has at its end a flat interface with said machining aggregate M4.

Said machine tool M comprises a pneumatic actuation system 1, as described in detail below, for actuating sad machining aggregate M4.

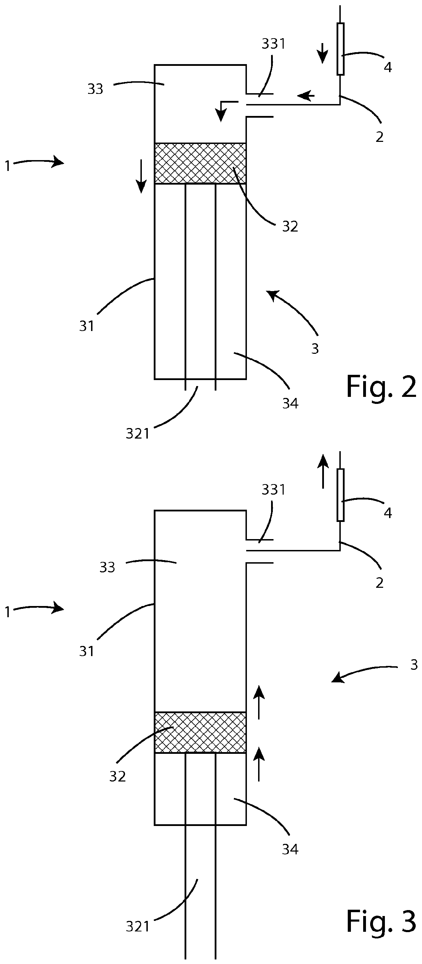

Figure 2 shows the basic diagram of a first embodiment of a pneumatic actuation system 1 according to the invention.

The system 1 can be connected to an air supply line 2 and basically comprises a piston-cylinder assembly 3, having a cylinder 31 and a piston 32, movable in the cylinder 31.

Said air supply line 2 is guided up to said flat interface.

The cylinder 31 of said piston-cylinder assembly 3 has a first 33 and a second 34 chamber, separated by said piston 32.

Said piston 31 comprises a rod 321, to which can be connected a machining head (not shown in the drawings), in which can be housed a spindle for the connection of a machine tool (not shown in the drawings).

The machine tool can be suitable for machining wood, plastic, fibreglass and the like.

The supply line 2 is connected fluid dynamically to the first chamber 33 of said piston-cylinder assembly 3 through an inlet opening 331.

The pneumatic actuation system 1 also comprises a pressure control unit 4, designed to increase or decrease the pressure inside said first chamber 33 of said cylinder 31.

The second chamber 34 of said cylinder 31 is normally at ambient pressure, equal generally to approximately 1 Bar.

The operation of the pneumatic actuation system 1 described above is as follows.

Again with reference to Figure 2, when the pressure control unit 4 supplies compressed air into said first chamber 33 of said cylinder 31 through said supply line 2, the piston 32 lowers, carrying out a first operation, since the pressure of said first chamber 33 is greater than that of said second chamber 34 of said cylinder 31.

On the other hand, with reference to Figure 3, when the pressure control unit 4 reduces the pressure in said first chamber 33 of said cylinder 31, that is to say, creates a vacuum, for example of approximately 0.5 Bar, considering that the pressure of the second chamber 34 of said cylinder 31 remains constant (at, as said, approximately 1 Bar), the piston 32 will tend spontaneously to rise, performing a second operation, since the pressure of said first chamber 33 is less than that of said second chamber 34 of said cylinder 31.

Preferably, the piston-cylinder assembly 3 also comprises a silencer filter connected to said second chamber 34.

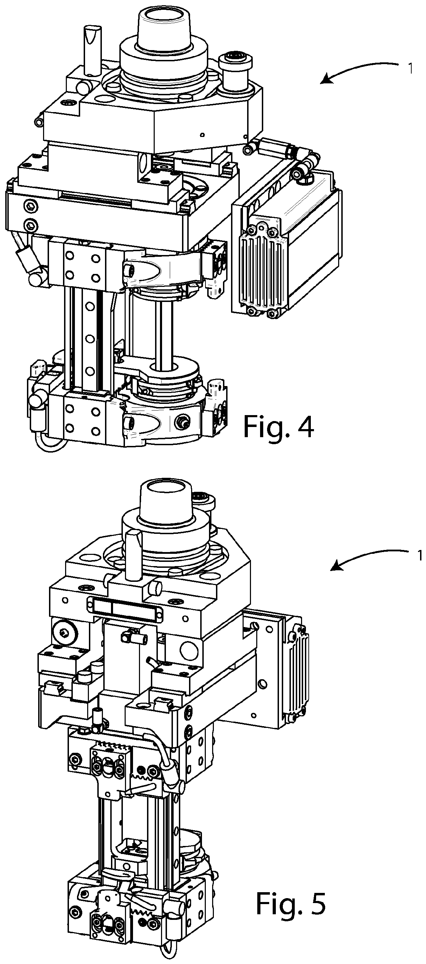

Figures 4 and 5 show the structure of an embodiment of the pneumatic actuation system 1.

An advantage of the invention is to allow the control of a piston-cylinder assembly by means of a single compressed air supply line. This enables a reduction in the overall costs of the system, as well as a reduction in the overall dimensions.

## Claims

1. Machine tool (M) for machining pieces (P) made of wood or at least partially wood, plastic, glass, marble, composite materials, or the like, comprising
a base (M1) comprising a supporting surface and a blocking system for supporting and blocking the piece to be machined,
a crossbeam (M2) placed above said base and movable relative thereto along a first direction (X),
a machining head (M3) coupled with said crossbeam (M2) and movable relative thereto along a second direction (Y), perpendicular to said first direction (X), and along a third direction (Z), perpendicular to said first (Y) and second (X) direction,
a machining aggregate (M4) for performing machining operations on said pieces, said machining aggregate (M4) being removably coupled with said machining head (M3),
a pneumatic actuation system (1) for the actuation of said machining aggregate (M4), associated with said machining head (M3) and having an air supply line (2), and
wherein said machining head (M3) has at its end a flat interface with said machining aggregate (M4) up to which said air supply line (2) is guided,
said machine (M) being **characterized in that** said pneumatic actuation system (1) comprises a pressure control unit (U) installed on said air supply line (2) and configured for:
- blowing air through said air supply line (2) to supply compressed air to said machining aggregate (M4) to perform a first operation, and
- sucking air through said air supply line (2) to generate vacuum for said machining aggregate (M4) to perform a second operation, the machine further comprising
a piston-cylinder assembly (3), having a cylinder (31) and a piston (32), wherein said cylinder (31) has a first (33) and a second (34) chamber separated by said piston (32), and wherein,
when the pressure control unit (4) supplies compressed air into said first chamber (33) through said air supply line (2), said piston (32) is extracted, so as to carry out said first operation, and
when the pressure control unit (4) generates a vacuum in said first chamber (33) through said air supply line (2), said piston (32) is retracted, so as to carry out said second operation.

2. Machine (1) according to claim 1, **characterized in that** said piston-cylinder assembly (3) comprises a silencer filter connected to said second chamber (34).

3. Operating method of a machine tool (M) according to claim 1 or 2
wherein said pneumatic actuation system (1) is configured to perform the following steps:
- blowing air through said air supply line (2) to supply compressed air to said machining aggregate (M4) to perform a first operation, and
- sucking air through said air supply line (2) to generate vacuum for said machining aggregate (M4) to perform a second operation.

4. Method according to the preceding claim, **characterized in that**
said first operation increases upon command the pressure of said first chamber (33) by means of the compressed air coming from said air supply line (2), so that the pressure of said first chamber (33) of said cylinder (31) is greater than that of said second chamber (34) of said cylinder (31), for lowering said piston (32), and
said second operation reduces upon command the pressure of said first chamber (33) of said cylinder (31), that is to say creates a vacuum in said first chamber (33), so that the pressure of said first chamber (33) of said cylinder (31) is smaller than that in said second chamber (34) of said cylinder (31), for rising said piston (32).

## Patentansprüche

1. Werkzeugmaschine (M) zum Bearbeiten von Werkstücken (P), die aus Holz oder zumindest teilweise aus Holz, Kunststoff, Glas, Marmor, Verbundwerkstoffen oder dergleichen gefertigt sind, umfassend
eine Basis (M1), umfassend eine Auflagefläche und ein Blockiersystem zum Tragen und Blockieren des zu bearbeitenden Werkstücks,
einen Querträger (M2), der oberhalb der Basis platziert und in Bezug darauf in einer ersten Richtung (X) bewegbar ist,
einen Bearbeitungskopf (M3), der mit dem Querträger (M2) gekoppelt und in Bezug darauf in einer zweiten Richtung (Y), die senkrecht zu der ersten Richtung (X) ist, und in einer dritten Richtung (Z), die senkrecht zu der ersten (Y) und der zweiten (X) Richtung ist, bewegbar ist, einen Bearbeitungszusatz (M4) zum Ausführen von Bearbeitungsvorgängen an den Werkstücken,
wobei der Bearbeitungszusatz (M4) abnehmbar mit dem Bearbeitungskopf (M3) verbunden ist,
ein pneumatisches Betätigungssystem (1) für die Betätigung des Bearbeitungszusatzes (M4), der mit dem Bearbeitungskopf (M3) verbunden ist und eine Luftzufuhrleitung (2) aufweist, und
wobei der Bearbeitungskopf (M3) an seinem Ende eine flache Schnittstelle mit dem Bearbeitungszusatz (M4) aufweist, bis zu dem die Luftzufuhrleitung (2) geführt wird,
wobei die Maschine (M) **dadurch gekennzeichnet ist, dass** das pneumatische Betätigungssystem (1) eine Drucksteuerungseinheit (U) umfasst, die an der Luftzufuhrleitung (2) installiert und zu Folgendem konfiguriert ist:
- Blasen von Luft durch die Luftzufuhrleitung (2), um den Bearbeitungszusatz (M4) mit Druckluft zu versorgen, um einen ersten Vorgang auszuführen, und
- Ansaugen von Luft durch die Luftzufuhrleitung (2), um ein Vakuum für den Bearbeitungszusatz (M4) zu erzeugen, um einen zweiten Vorgang auszuführen, die Maschine ferner umfassend
eine Kolben-Zylinder-Anordnung (3), die einen Zylinder (31) und einen Kolben (32) aufweist, wobei der Zylinder (31) eine erste (33) und eine zweite (34) Kammer aufweist, die durch den Kolben (32) getrennt sind, und wobei
wenn die Drucksteuerungseinheit (4) über die Luftzufuhrleitung (2) Druckluft in die erste Kammer (33) zuführt, der Kolben (32) herausgezogen wird, um den ersten Vorgang auszuführen, und
wenn die Drucksteuerungseinheit (4) über die Luftzufuhrleitung (2) ein Vakuum in der ersten Kammer (33) erzeugt, der Kolben (32) zurückgezogen wird, um den zweiten Vorgang auszuführen.

2. Maschine (1) nach Anspruch 1, **dadurch gekennzeichnet, dass** die Kolben-Zylinder-Anordnung (3) einen Schalldämpferfilter umfasst, der mit der zweiten Kammer (34) verbunden ist.

3. Betriebsverfahren einer Werkzeugmaschine (M) nach Anspruch 1 oder 2,
wobei das pneumatische Betätigungssystem (1) konfiguriert ist, um die folgenden Schritte auszuführen:
- Blasen von Luft durch die Luftzufuhrleitung (2), um den Bearbeitungszusatz (M4) mit Druckluft zu versorgen, um einen ersten Vorgang auszuführen, und
- Ansaugen von Luft durch die Luftzufuhrleitung (2), um ein Vakuum für den Bearbeitungszusatz (M4) zu erzeugen, um einen zweiten Vorgang auszuführen.

4. Verfahren nach dem vorherigen Anspruch, **dadurch gekennzeichnet, dass** der erste Vorgang auf Befehl den Druck der ersten Kammer (33) mittels der von der Luftzufuhrleitung (2) kommenden Druckluft erhöht, sodass der Druck der ersten Kammer (33) des Zylinders (31) größer ist als der der zweiten Kammer (34) des Zylinders (31), um den Kolben (32) abzusenken, und
der zweite Vorgang auf Befehl den Druck in der ersten Kammer (33) des Zylinders (31) reduziert, d.h. ein Vakuum in der ersten Kammer (33) erzeugt, sodass der Druck in der ersten Kammer (33) des Zylinders (31) kleiner ist als der in der zweiten Kammer (34) des Zylinders (31), um den Kolben (32) anzuheben.

## Revendications

1. Machine-outil (M) pour l'usinage de pièces (P) en bois ou au moins partiellement en bois, en plastique, en verre, en marbre, en matériaux composites ou similaires, comprenant
une base (M1) comprenant une surface d'appui et un système de blocage pour supporter et bloquer la pièce à usiner,
une traverse (M2) placée au-dessus de ladite base et mobile par rapport à celle-ci selon une première direction (X),
une tête d'usinage (M3) couplée à ladite traverse (M2) et mobile par rapport à celle-ci selon une deuxième direction (Y), perpendiculaire à ladite première direction (X), et selon une troisième direction (Z), perpendiculaire à ladite première (Y) et deuxième (X) direction,
un agrégat d'usinage (M4) pour effectuer des opérations d'usinage sur lesdites pièces, ledit agrégat d'usinage (M4) étant couplé de manière amovible à ladite tête d'usinage (M3),
un système d'actionnement pneumatique (1) pour l'actionnement dudit agrégat d'usinage (M4), associé à ladite tête d'usinage (M3) et comportant une conduite d'alimentation en air (2), et
dans laquelle ladite tête d'usinage (M3) présente à son extrémité une interface plate avec ledit agrégat d'usinage (M4) jusqu'à laquelle est guidée ladite conduite d'alimentation en air (2),
ladite machine (M) est **caractérisée en ce que** ledit système d'actionnement pneumatique (1) comprend une unité de contrôle de la pression (U) installée sur ladite conduite d'alimentation en air (2) et configurée pour:
- souffler de l'air à travers ladite conduite d'alimentation en air (2) pour fournir de l'air comprimé audit agrégat d'usinage (M4) afin d'effectuer une première opération, et
- aspirer de l'air à travers ladite conduite d'alimentation en air (2) pour générer un vide pour ledit agrégat d'usinage (M4) afin d'effectuer une deuxième opération, la machine comprenant en outre
un ensemble piston-cylindre (3), comportant un cylindre (31) et un piston (32), dans lequel ledit cylindre (31) comporte une première (33) et une deuxième (34) chambre séparées par ledit piston (32), et dans lequel,
lorsque l'unité de contrôle de la pression (4) fournit de l'air comprimé dans ladite première chambre (33) par le biais de ladite conduite d'alimentation en air (2), ledit piston (32) est extrait, de manière à effectuer ladite première opération, et
lorsque l'unité de contrôle de la pression (4) génère un vide dans ladite première chambre (33) par le biais de ladite conduite d'alimentation en air (2), ledit piston (32) est rétracté, de manière à effectuer ladite deuxième opération.

2. Machine (1) selon la revendication 1, **caractérisée par le fait que** l'ensemble piston-cylindre (3) comprend un filtre silencieux relié à la deuxième chambre (34).

3. Procédé de fonctionnement d'une machine-outil (M) selon la revendication 1 ou 2
dans lequel ledit système d'actionnement pneumatique (1) est configuré pour effectuer les étapes suivantes :
- souffler de l'air à travers ladite conduite d'alimentation en air (2) pour fournir de l'air comprimé audit agrégat d'usinage (M4) afin d'effectuer une première opération, et
- aspirer de l'air à travers ladite conduite d'alimentation en air (2) pour générer un vide pour ledit agrégat d'usinage (M4) afin d'effectuer une deuxième opération.

4. Procédé selon la revendication précédente, **caractérisé en ce que** ladite première opération augmente sur commande la pression de ladite première chambre (33) au moyen de l'air comprimé provenant de ladite conduite d'alimentation en air (2), de sorte que la pression de ladite première chambre (33) dudit cylindre (31) est supérieure à celle de ladite deuxième chambre (34) dudit cylindre (31), pour abaisser ledit piston (32), et
ladite deuxième opération réduit sur commande la pression de ladite première chambre (33) dudit cylindre (31), c'est-à-dire crée un vide dans ladite première chambre (33), de sorte que la pression de ladite première chambre (33) dudit cylindre (31) est inférieure à celle de ladite deuxième chambre (34) dudit cylindre (31), pour faire monter ledit piston (32) .
